# EUROPEAN PATENT APPLICATION

(11) **EP 4 806 856 A1**
(43) Date of publication of application: **16.09.2026**
(21) Application number: 25864725.4
(22) Date of filing: 19.02.2025
(51) Int. Cl.: C03B 37/027, G02B 6/02, C03B 37/012

(54) **METHOD FOR MANUFACTURING HOLLOW-CORE OPTICAL FIBER, AND HOLLOW-CORE OPTICAL FIBER**

(30) Priority: 14.09.2024 CN 202411288038
(71) Applicant: Zhongtian Technology Advanced Materials Co., Ltd., Nantong, Jiangsu 226000 (CN); Fudan University, Shanghai 200082 (CN); Jiangsu Zhongtian Technology Co., Ltd., Nantong, Jiangsu (CN)
(72) Inventor: QIN, Yu, Nantong, Jiangsu 226010 (CN); ZHU, Jie, Nantong, Jiangsu 226010 (CN); SHEN, Yichun, Nantong, Jiangsu 226010 (CN); XIAO, Limin, Nantong, Jiangsu 226010 (CN); ZHOU, Hui, Nantong, Jiangsu 226010 (CN); ZHANG, Junyi, Nantong, Jiangsu 226010 (CN); XU, Weiwei, Nantong, Jiangsu 226010 (CN); WANG, Jianqing, Nantong, Jiangsu 226010 (CN); CHEN, Yali, Nantong, Jiangsu 226010 (CN); JIANG, Xinli, Nantong, Jiangsu 226010 (CN)
(74) Representative: J A Kemp LLP
(86) International application number: PCT/CN2025/078063
(87) International publication number: WO 2026/056217

(57) **Abstract**

This application provides a method for manufacturing a hollow-core optical fiber and a hollow-core optical fiber, relating to the technical field of communication engineering; the method for manufacturing a hollow-core optical fiber includes: arranging a plurality of tubular elements on an inner wall of an outer cladding; arranging a supporting element between adj acent tubular elements; arranging a central element coaxially with the outer cladding inside the outer cladding, and abutting the central element against the plurality of supporting elements; communicating spaces among an outer wall of the central element, the plurality of tubular elements, and the plurality of supporting elements to form a first communicated region, where an interior of the central element serves as a gas-filling region; heating an interior of the outer cladding; separately filling gas into the gas-filling region and the first communicated region, and adjusting gas pressures within the gas-filling region and the first communicated region such that the central element deforms toward a center of the outer cladding to form a plurality of first anti-resonant layers spaced apart from one another; the method for manufacturing a hollow-core optical fiber of this application reduces loss during optical signal transmission in the hollow-core optical fiber.

## Description

### TECHNICAL FIELD

This application relates to the technical field of communication engineering, and in particular, to a method for manufacturing a hollow-core optical fiber and a hollow-core optical fiber.

### BACKGROUND

Hollow-core anti-resonant optical fiber utilizes air rather than the glass material in traditional optical fiber to transmit optical signals. This design helps to overcome issues such as nonlinearity, dispersion, photo-induced damage, and material absorption loss during transmission in conventional solid-core optical fibers; the light-guiding mechanism of hollow-core anti-resonant optical fiber is primarily based on the anti-resonant effect, that is, through the cladding structure of the optical fiber, light waves undergo coherent destructive interference at the interface between the air core and the cladding, thereby suppressing light wave leakage and achieving effective transmission of optical signals.

In the related art, a hollow-core optical fiber includes a quartz tube and a plurality of cladding structures, the plurality of cladding structures being uniformly distributed along the circumferential direction of the inner wall of the quartz tube, with an air core being located at the central position of the plurality of cladding structures; when arranging the plurality of cladding structures, it is necessary to maintain that there is no crossing or connection point between the plurality of cladding structures, each cladding structure being an independent unit. In some hollow-core optical fibers, the cladding structures adopt a multi-layer nested structure, which is formed by mutually nesting an outer tube and an inner tube.

However, when manufacturing a hollow-core optical fiber having a multi-layer nested structure, since each cladding structure is an independent unit, independently manufacturing each cladding structure may lead to inconsistencies in thickness, shape, and position among the plurality of cladding structures, reducing the uniformity of the overall manufacturing of the hollow-core optical fiber, thereby increasing the loss during optical signal transmission in the hollow-core optical fiber.

### SUMMARY

This application provides a method for manufacturing a hollow-core optical fiber and a hollow-core optical fiber, to solve the technical problem in the related art that the plurality of cladding structures of the hollow-core optical fiber are non-uniform, thereby increasing the transmission loss of optical signals in the hollow-core optical fiber.

In one aspect, this application provides a method for manufacturing a hollow-core optical fiber, including:
arranging a plurality of tubular elements on an inner wall of an outer cladding along a circumferential direction of the outer cladding;
arranging a supporting element between adjacent tubular elements, and bringing the supporting element into tangency with the tubular elements;
arranging a central element coaxially with the outer cladding inside the outer cladding, and abutting the central element against a plurality of supporting elements;
communicating spaces among an outer wall of the central element, the plurality of tubular elements, and the plurality of supporting elements to form a first communicated region, where an interior of the central element serves as a gas-filling region;
heating an interior of the outer cladding;
separately filling gas into the gas-filling region and the first communicated region, and adjusting gas pressures within the gas-filling region and the first communicated region such that the central element deforms toward a center of the outer cladding, thereby forming a plurality of first anti-resonant layers spaced apart from one another.

In some embodiments, communicating spaces among the outer wall of the central element, the plurality of tubular elements and the plurality of supporting elements to form the first communicated region includes:
providing a first groove on a side of the supporting element distal from the inner wall of the outer cladding tube, and controlling the first grooves to be arranged along a radial direction of the supporting element, such that spaces among the outer wall of the central element, the plurality of tubular elements, and the plurality of supporting elements are communicated via a plurality of first grooves to form the first communicated region.

In some embodiments, before heating of the interior of the outer cladding, the method includes:
communicating spaces among an inner wall of the outer cladding, the plurality of tubular elements and the plurality of supporting elements with interiors of the plurality of tubular elements to form a second communicated region;
and, after heating of the interior of the outer cladding, the method includes:
   separately filling gas into the second communicated region, and adjusting a gas filling pressure within the second communicated region such that the plurality of first tubular elements deform into the plurality of first anti-resonant layers, to form a plurality of second anti-resonant layers.

In some embodiments, communicating spaces among the inner wall of the outer cladding, the plurality of tubular elements and the plurality of supporting elements with interiors of the plurality of tubular elements to form the second communicated region includes:
providing a communication hole extending through the tubular element in the tubular element;
providing a second groove on a side of the supporting element proximal to the inner wall of the outer cladding tube, and controlling the second groove to be arranged along a radial direction of the supporting element, such that spaces among the inner wall of the outer cladding, the plurality of tubular elements and the plurality of supporting elements are communicated with the interiors of the plurality of tubular elements via a plurality of second grooves to form the second communicated region.

In some embodiments, before arranging the central element coaxially with the outer cladding inside the outer cladding, the method includes:
cutting the plurality of supporting elements so as to form, on a side of each supporting element distal from the inner wall of the outer cladding, a positioning groove for receiving a portion of the central element;
subjecting the positioning groove to honing, acid pickling, and drying treatments.

In some embodiments, cutting the plurality of supporting elements includes:
forming a cutting surface using an axis of the outer cladding as a center and using a radius R1, and cutting the plurality of supporting elements along an axial direction of the outer cladding by means of the cutting surface, so as to form, on the side of each supporting element distal from the inner wall of the outer cladding, the positioning groove, where R2-2R3>R1>R4, R2 being an inner radius of the outer cladding, R3 being an outer radius of the tubular element, and R4 being an outer radius of the central element.

In some embodiments, heating the interior of the outer cladding includes:
heating the central element, the plurality of supporting elements, and the plurality of tubular elements so as to fusion-splice the central element with the plurality of supporting elements and fusion-splice tangential points between the plurality of supporting elements and the plurality of tubular elements;
providing seals at contact positions between the plurality of supporting elements and the plurality of tubular elements.

In some embodiments, providing seals at the contact positions between the plurality of supporting elements and the plurality of tubular elements includes:
forming the seals at the contact positions between the plurality of supporting elements and the plurality of tubular elements by performing additional welding of quartz.

In some embodiments, the method includes:
controlling the number of the tubular elements and the supporting elements, the inner radius of the outer cladding, the outer radius of the tubular element, the outer radius of the central element, and the outer radius of the supporting elements to satisfy the following formula: ${\left({R}_{3}+{R}_{5}\right)}^{2} = {\left({R}_{4}+{R}_{5}\right)}^{2} + {\left({R}_{2}-{R}_{3}\right)}^{2} - 2 \left({R}_{4}+{R}_{5}\right) \left({R}_{2}-{R}_{3}\right) cos \frac{π}{X}$
where X is the number of the tubular elements and the supporting elements, R2 is the inner radius of the outer cladding, R3 is the outer radius of the tubular element, R4 is the outer radius of the central element, and R5 is the outer radius of the supporting element.

In another aspect, this application provides a hollow-core optical fiber, the hollow-core optical fiber being produced by the method for manufacturing a hollow-core optical fiber.

This application provides a method for manufacturing a hollow-core optical fiber and a hollow-core optical fiber. The method for manufacturing a hollow-core optical fiber provided by this application, by adopting the arrangement of a plurality of supporting elements, can provide a supporting effect for the central element. When gas is separately filled into the gas-filling region and the first communicated region, by adjusting and controlling the gas pressures within the gas-filling region and the first communicated region, the gas pressure within the gas-filling region can keep the central element in abutment with the plurality of supporting elements, while the gas pressure within the first communicated region can simultaneously deform the portions of the central element adjacent to and between two supporting elements, thereby causing multiple positions in the circumferential direction of the central element to deform simultaneously, forming a plurality of first anti-resonant layers. Due to provision of the gas-filling region, the first communicated region, and the plurality of supporting elements, the plurality of deformed first anti-resonant layers can have the same shape, thickness, and position, improving the uniformity of the overall manufacturing of the hollow-core optical fiber, thereby indirectly reducing the loss of the hollow-core optical fiber during optical signal transmission. By arranging the plurality of first anti-resonant layers to be spaced apart from one another, the plurality of first anti-resonant layers are brought into no contact with each other, preventing the shapes of adjacent first anti-resonant layers from changing due to contact after deformation, so that the plurality of first anti-resonant layers further have the same shape, thickness, and position, thereby further improving the uniformity of the plurality of first anti-resonant layers.

### BRIEF DESCRIPTION OF DRAWINGS

The accompanying drawings therein, which are incorporated in and constitute a part of this specification, illustrate embodiments consistent with this application and together with the description serve to explain the principles of this application.
FIG. 1 is a schematic flowchart of a method for manufacturing a hollow-core optical fiber according to an embodiment of this application;
FIG. 2 is a schematic structural diagram of an outer cladding, tubular elements, and supporting elements of a method for manufacturing a hollow-core optical fiber according to an embodiment of this application;
FIG. 3 is a schematic structural diagram of a supporting element with a first groove and a second groove formed in a method for manufacturing a hollow-core optical fiber according to an embodiment of this application;
FIG. 4 is a schematic structural diagram of FIG. 3 from another perspective;
FIG. 5 is a schematic structural diagram of a first groove, a second groove, and a communication hole formed in a method for manufacturing a hollow-core optical fiber according to an embodiment of this application;
FIG. 6 is a schematic structural diagram showing a state of a plurality of supporting elements before and after cutting in a method for manufacturing a hollow-core optical fiber according to an embodiment of this application;
FIG. 7 is a schematic structural diagram showing a state of a central element cooperating with a plurality of positioning grooves in a method for manufacturing a hollow-core optical fiber according to an embodiment of this application;
FIG. 8 is a schematic structural diagram showing a state of a central element deforming to form first anti-resonant layers in a method for manufacturing a hollow-core optical fiber according to an embodiment of this application;
FIG. 9 is a schematic structural diagram showing a state of tubular elements deforming to form second anti-resonant layers in a method for manufacturing a hollow-core optical fiber according to an embodiment of this application.

Description of Reference Numerals:
100: Outer cladding;
200: Tubular element; 210: Second anti-resonant layer; 220: Communication hole; 221: First through hole; 222: Second through hole;
300: Supporting element; 310: First groove; 320: Second groove; 330: Positioning groove;
400: Central element; 410: First anti-resonant layer;
500: First communicated region;
600: Gas-filling region;
700: Second communicated region.

Through the above drawings, specific embodiments of this application have been shown, and will be described in more detail hereinafter. These drawings and written description are not intended to limit the scope of the concept of this application in any manner, but rather to illustrate the concept of this application to those skilled in the art by reference to specific embodiments.

### DESCRIPTION OF EMBODIMENTS

Exemplary embodiments will be described in detail herein, examples of which are illustrated in the accompanying drawings. When the following description refers to the accompanying drawings, the same numerals in different drawings represent the same or similar elements unless otherwise indicated. The implementations described in the following exemplary embodiments do not represent all implementations consistent with this application. Rather, they are merely examples of apparatuses and methods consistent with some aspects of this application as detailed in the appended claims.

As described in the background art, a hollow-core optical fiber of the related art includes a quartz tube and a plurality of cladding structures, the plurality of cladding structures being uniformly distributed along the circumferential direction of the inner wall of the quartz tube, with an air core being located at the central position of the plurality of cladding structures. When arranging the plurality of cladding structures, it is necessary to maintain that there is no crossing or connection point between the plurality of cladding structures in terms of structure; each cladding structure is an independent unit. If there is a crossing or connection point between adjacent cladding structures, such optical performance is compromised, resulting in reduced light wave transmission efficiency or poor mode control. In some hollow-core optical fibers, the cladding structures adopt a multi-layer nested structure, which is formed by mutually nesting an outer tube and an inner tube.

However, when manufacturing a hollow-core optical fiber having a multi-layer nested structure, since each cladding structure is an independent unit, independently manufacturing each cladding structure may lead to inconsistencies in thickness, shape, and position among the plurality of cladding structures, reducing the uniformity of the overall manufacturing of the hollow-core optical fiber, thereby increasing the loss during optical signal transmission in the hollow-core optical fiber. For example, when each cladding structure is inflated and drawn, uneven inflation pressure may cause structural inconsistencies among the plurality of cladding structures, such as one cladding structure being wider and another cladding structure being narrower. Cladding structures of different configurations have different refractive indices, leading to mode coupling and mode conversion, affecting the mode purity and performance of the optical fiber.

In view of the above technical problem, embodiments of this application provide a method for manufacturing a hollow-core optical fiber and a hollow-core optical fiber. By separately filling gas into the gas-filling region, the first communicated region, and the second communicated region, and by adjusting the gas pressure in the first communicated region to be equal to the gas pressure in the second communicated region, and making the gas pressure in the gas-filling region lower than the gas pressure in the first communicated region and the second communicated region, the portions of the central element between two adjacent supporting elements deform toward the axis of the outer cladding, simultaneously forming a plurality of first anti-resonant layers. At this time, the gas pressure in the second communicated region is adjusted to be greater than the gas pressure in the first communicated region, causing the tubular elements to deform into the first anti-resonant layers, thereby simultaneously forming a plurality of second anti-resonant layers. By employing the arrangement of the plurality of supporting elements, the gas-filling region, the first communicated region, and the second communicated region, the plurality of first anti-resonant layers and the plurality of second anti-resonant layers can be simultaneously formed, so that the plurality of first anti-resonant layers maintain consistency in structure, and the plurality of second anti-resonant layers maintain consistency in structure. This enables the plurality of first anti-resonant layers after deformation to have the same shape, thickness, and position, and the plurality of second anti-resonant layers after deformation can have the same shape, thickness, and position, improving the uniformity of the overall manufacturing of the hollow-core optical fiber, thereby indirectly reducing the loss of the hollow-core optical fiber during optical signal transmission.

The technical solutions of this application and how the technical solutions of this application solve the above technical problems will be described in detail below with reference to specific embodiments. The following specific embodiments may be combined with one another, and the same or similar concepts or processes may not be repeated in some embodiments. The embodiments of this application will be described below with reference to the accompanying drawings.

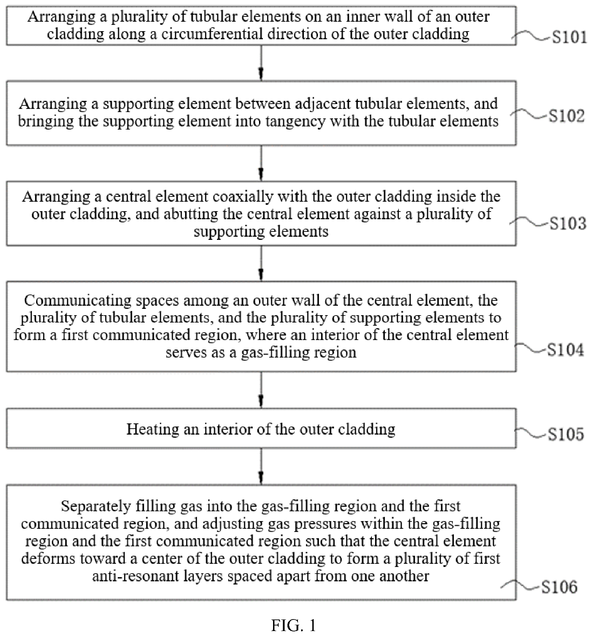

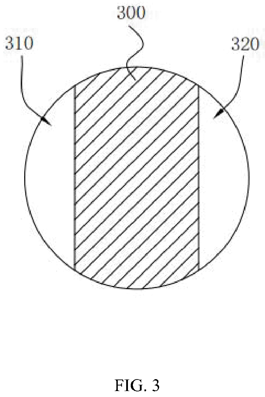

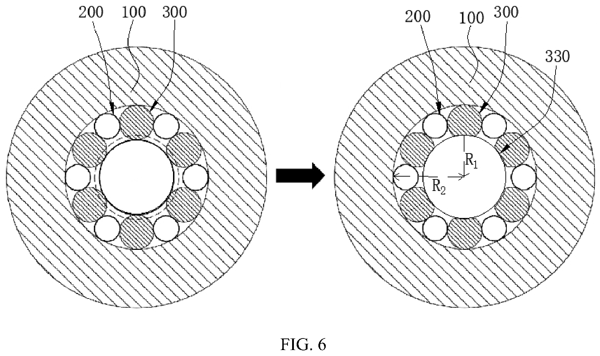

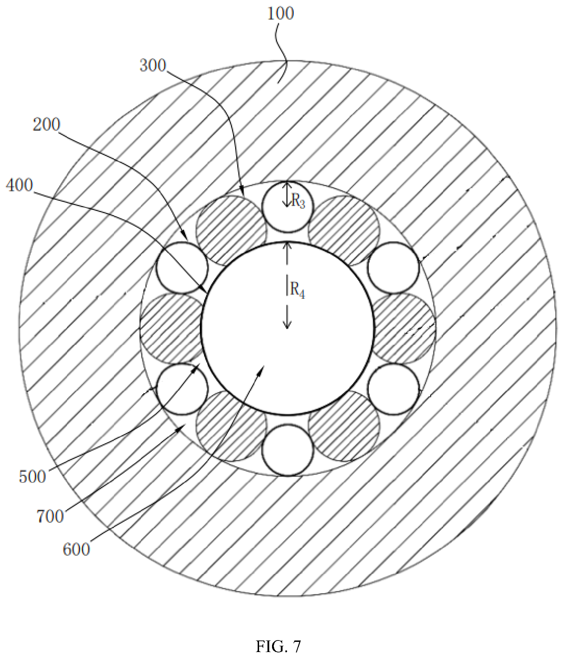

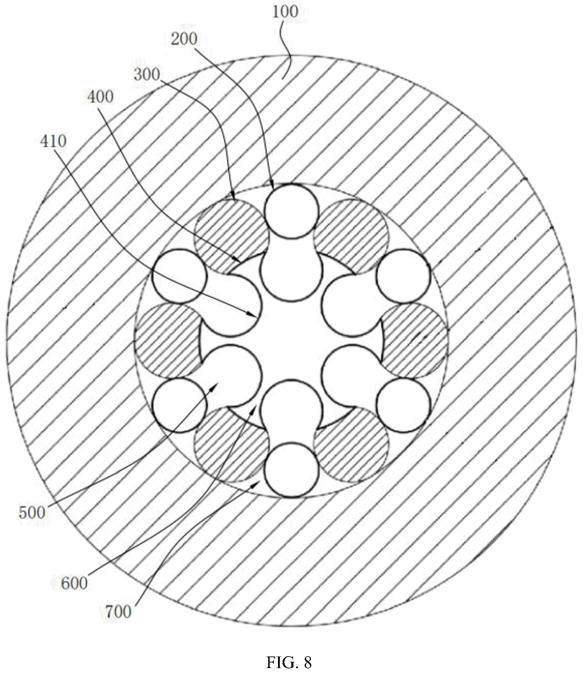

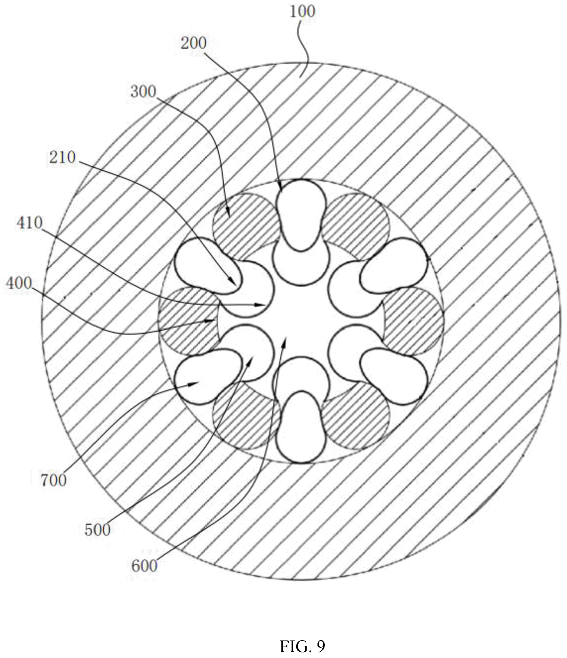

With reference to FIGS. 1 to 9, a method for manufacturing a hollow-core optical fiber includes:
S101: arranging a plurality of tubular elements 200 on an inner wall of an outer cladding 100 along a circumferential direction of the outer cladding 100;
S102: arranging a supporting element 300 between adjacent tubular elements 200, and bringing the supporting element 300 into tangency with the tubular elements 200;
S103: arranging a central element 400 coaxially with the outer cladding 100 inside the outer cladding 100, and abutting the central element 400 against a plurality of supporting elements 300;
S104: communicating spaces among an outer wall of the central element 400, the plurality of tubular elements 200, and the plurality of supporting elements 300 to form a first communicated region 500, where an interior of the central element 400 is a gas-filling region 600;
S105: heating an interior of the outer cladding 100;
S106: separately filling gas into the gas-filling region 600 and the first communicated region 500, and adjusting gas pressures within the gas-filling region 600 and the first communicated region 500 such that the central element 400 deforms toward a center of the outer cladding 100, thereby forming a plurality of first anti-resonant layers 410 spaced apart from one another.

In this embodiment, the cross-sections of the outer cladding 100, the tubular elements 200, and the supporting elements 300 are all circular. The outer cladding 100 and the tubular elements 200 are hollow quartz tubes, and the supporting elements 300 are solid quartz rods. The quartz tubes and quartz rods are processed by a drawing method to form the outer cladding 100, the tubular elements 200, and the supporting elements 300. The drawing process for quartz material is a process of forming molten quartz into elongated fibers or rods through stretching, and is widely used in fields such as optical fiber communication and special optical fiber manufacturing. The specific process of drawing is not described in detail in this embodiment. The numbers of tubular elements 200 and supporting elements 300 can be adaptively adjusted according to requirements. In this embodiment, six tubular elements 200 and six supporting elements 300 are provided, and the central element 400 is located in the middle of the six supporting elements 300. The lengths of the tubular elements 200, the supporting elements 300, and the central element 400 are all 1000 mm. The lengths of the tubular elements 200, the supporting elements 300, and the central element 400 can be adaptively adjusted according to requirements.

By adopting the above technical solution, the arrangement of the plurality of supporting elements 300 can provide a supporting effect for the central element 400. When gas is separately supplied into the gas-filling region 600 and the first communicated region 500, by adjusting and controlling the gas pressures within the gas-filling region 600 and the first communicated region 500, the gas pressure within the gas-filling region 600 can keep the central element 400 in abutment with the plurality of supporting elements 300, while the gas pressure within the first communicated region 500 can simultaneously deform the portions of the central element 400 adjacent to and between two supporting elements 300, thereby causing multiple positions in the circumferential direction of the central element 400 to deform synchronously to form the plurality of first anti-resonant layers 410. Due to the arrangement of the gas-filling region 600, the first communicated region 500, and the plurality of supporting elements 300, the plurality of first anti-resonant layers 410 after deformation can have the same shape, thickness, and position, improving the uniformity of the overall manufacturing of the hollow-core optical fiber, thereby indirectly reducing the loss of the hollow-core optical fiber during optical signal transmission. By arranging the plurality of first anti-resonant layers 410 to be spaced apart from one another, the plurality of first anti-resonant layers 410 are not in contact with each other, preventing the shape of adjacent first anti-resonant layers 410 from changing due to contact after deformation, so that the plurality of first anti-resonant layers further have the same shape, thickness, and position, thereby further improving the uniformity of the plurality of first anti-resonant layers 410.

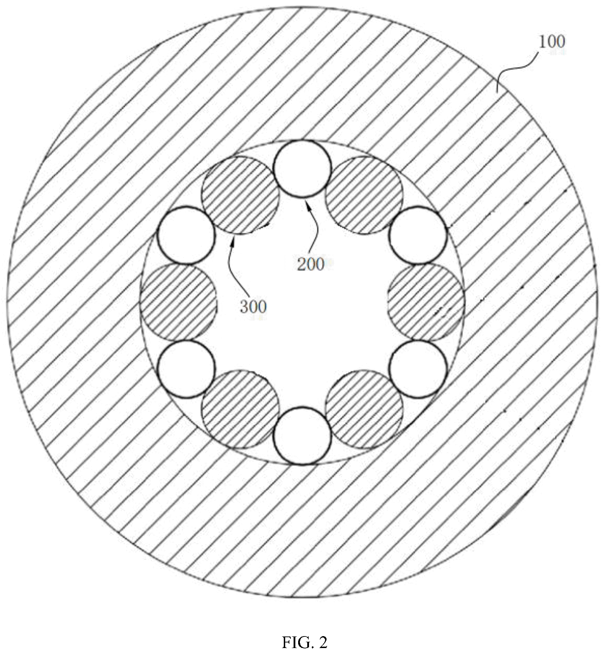

With reference to FIGS. 2 to 8, communicating spaces among the outer wall of the central element 400, the plurality of tubular elements 200 and the plurality of supporting elements 300 to form the first communicated region 500 includes:
providing a first groove 310 on a side of the supporting element 300 distal from the inner wall of the outer cladding, and controlling the first groove 310 to be arranged along a radial direction of the supporting element 300, such that spaces among the outer wall of the central element 400, the plurality of tubular elements 200 and the plurality of supporting elements 300 are communicated via a plurality of first grooves 310 to form the first communicated region 500.

In this embodiment, a side of the first groove 310 distal from the axis of the supporting element 300 extends through the supporting element 300. The first groove 310 extends through both ends of the supporting element 300 in a radial direction of the supporting element 300. A distance between the first groove 310 and an end surface of the supporting element 300 is greater than or equal to 5 mm and less than or equal to 30 mm. A length of the first groove 310 is greater than or equal to 5 mm and less than or equal to 30 mm. The first groove 310 is perpendicular to a line connecting the axis of the supporting element 300 and the axis of the outer cladding 100. Before arranging the supporting elements 300 inside the outer cladding 100, the first grooves 310 can be cut out in the supporting elements 300 by means of mechanical equipment cutting, thereby preventing the internal space of the outer cladding 100 from limiting manual operation.

In adoption of the above technical solution, by providing the first grooves 310, the plurality of first grooves 310 can communicate spaces among the outer wall of the central element 400, the plurality of tubular elements 200, and the plurality of supporting elements 300 to form the first communicated region 500. When gas is filled into the first communicated region 500, the gas can pass through the plurality of first grooves 310, so that the gas pressure simultaneously acts on multiple positions of the central element 400 in the circumferential direction adjacent to and between two supporting elements 300, thereby causing multiple positions of the central element 400 in the circumferential direction of the central element 400 to deform simultaneously to form a plurality of first anti-resonant layers 410. The arrangement of the first grooves 310 has a simple structure and is easy to process, improving the communication effect of spaces among the outer wall of the central element 400, the plurality of tubular elements 200, and the plurality of supporting elements 300.

With reference to FIGS. 2 to 8, before heating the interior of the outer cladding 100, the method includes:
communicating spaces among an inner wall of the outer cladding 100, the plurality of tubular elements 200 and the plurality of supporting elements 300 with interiors of the plurality of tubular elements 200 to form a second communicated region 700;
and, after heating the interior of the outer cladding 100, the method includes:
   separately filling gas into the second communicated region 700, and adjusting a gas pressure within the second communicated region 700 such that the plurality of first tubular elements 200 deform into the plurality of first anti-resonant layers 410, thereby forming a plurality of second anti-resonant layers 210.

In this embodiment, there are six first anti-resonant layers 410 and six second anti-resonant layers 210. The six second anti-resonant layers 210 are disposed in one-to-one correspondence within the six first anti-resonant layers 410. The cross-sections of the first anti-resonant layers 410 and the second anti-resonant layers 210 are both arcuate. The second anti-resonant layer 210 located within the first anti-resonant layer 410 is not in contact with the first anti-resonant layer 410.

In adoption of the above technical solution, by forming the second anti-resonant layer 210 within the first anti-resonant layer 410, and by providing the first anti-resonant layer 410 in cooperation with the second anti-resonant layer 210, more anti-resonant conditions can be provided, increasing the confinement of the light beam in the air core, improving the light-guiding efficiency of the hollow-core optical fiber, and reducing the loss during optical signal transmission. By adopting the arrangement of the second communicated region 700, when gas is filled into the second communicated region 700, since the second communicated region 700 communicates the plurality of tubular elements 200, the filled gas pressure can simultaneously enter the plurality of tubular elements 200 through the second communicated region 700, thereby causing the plurality of tubular elements 200 to deform simultaneously. As a result, the plurality of second anti-resonant layers 210 after deformation can have the same shape, thickness, and position, improving the uniformity of the overall manufacturing of the hollow-core optical fiber, thereby indirectly reducing the loss of the hollow-core optical fiber during optical signal transmission. Moreover, since the second anti-resonant layer 210 is located within the first anti-resonant layer 410, adjacent second anti-resonant layers 210 are prevented from changing shape due to contact after deformation, so that the plurality of second anti-resonant layers further have the same shape, thickness, and position, thereby further improving the uniformity of the plurality of second anti-resonant layers 210.

With reference to FIGS. 2 to 8, communicating the spaces among the inner wall of the outer cladding 100, the plurality of tubular elements 200 and the plurality of supporting elements 300 with the interiors of the plurality of tubular elements 200 to form the second communicated region 700 includes:
providing a communication hole 220 in the tubular element 200 to extend through the tubular element 200;
providing a second groove 320 on a side of the supporting element 300 proximal to the inner wall of the outer cladding, and controlling the second groove 320 to be arranged along a radial direction of the supporting element 300, such that spaces among the inner wall of the outer cladding 100, the plurality of tubular elements 200 and the plurality of supporting elements 300 are communicated with the interiors of the plurality of tubular elements 200 via the plurality of second grooves 320 to form the second communicated region 700.

In this embodiment, because the tubular element 200 is hollow, the communication hole 220 on each tubular element 200 includes a first through hole 221 and a second through hole 222. An angle between a line connecting the first through hole 221 and the axis of the tubular element 200 and a line connecting the second through hole 222 and the axis of the tubular element 200 is 120°. The first through hole 221 and the second through hole 222 are arranged symmetrically with respect to a line connecting the axis of the tubular element 200 and a tangent point between the tubular element 200 and the inner wall of the outer cladding 100. The first through hole 221 and the second through hole 222 are located in a space between the tangent point of the tubular element 200 and the supporting element 300 and the tangent point of the tubular element 200 and the inner wall of the outer cladding 100. A distance between each of the first through hole 221 and the second through hole 222 and an end surface of the tubular element 200 is greater than or equal to 5 mm and less than or equal to 30 mm. A radius of each of the first through hole 221 and the second through hole 222 is greater than or equal to 0.2 mm and less than or equal to 3 mm. Before arranging the tubular elements 200 inside the outer cladding 100, the first through holes 221 and the second through holes 222 can be drilled in the tubular elements 200 by means of drilling equipment.

In this embodiment, a side of the second groove 320 distal from the axis of the supporting element 300 extends through the supporting element 300. The second groove 320 extends through both ends of the supporting element 300 in a radial direction of the supporting element 300. A distance between the second groove 320 and an end surface of the supporting element 300 is greater than or equal to 5 mm and less than or equal to 30 mm. A length of the second groove 320 is greater than or equal to 5 mm and less than or equal to 30 mm. The second groove 320 is perpendicular to a line connecting the axis of the supporting element 300 and the axis of the outer cladding 100. The second groove 320 and the first groove 310 are symmetrically distributed with respect to a line connecting tangent points between the tubular elements 200 and the adjacent supporting element 300. Before arranging the supporting elements 300 inside the outer cladding 100, the second grooves 320 can be cut out on the supporting elements 300 by means of mechanical equipment cutting, thereby preventing the internal space of the outer cladding 100 from limiting manual operation.

By adopting the above technical solution, when gas is filled into the second communicated region 700, the gas can enter, along the second grooves 320, the spaces between the inner wall of the outer cladding 100, the plurality of tubular elements 200, and the plurality of supporting elements 300, and can enter the interiors of the tubular elements 200 along the communication holes 220. Because the tubular elements 200 are tangential to the supporting elements 300, the supporting elements 300 can provide a supporting effect for the tubular elements 200. By respectively adjusting the filled gas pressures within the first communicated region 500 and the second communicated region 700, the plurality of tubular elements 200 simultaneously deform to form a plurality of second anti-resonant layers 210. The arrangement of the communication holes 220 and the second grooves 320 has a simple structure and is easy to process, improving the communication effect between the interiors of the plurality of tubular elements 200 and the spaces among the inner wall of the outer cladding 100, the plurality of tubular elements 200, and the plurality of supporting elements 300.

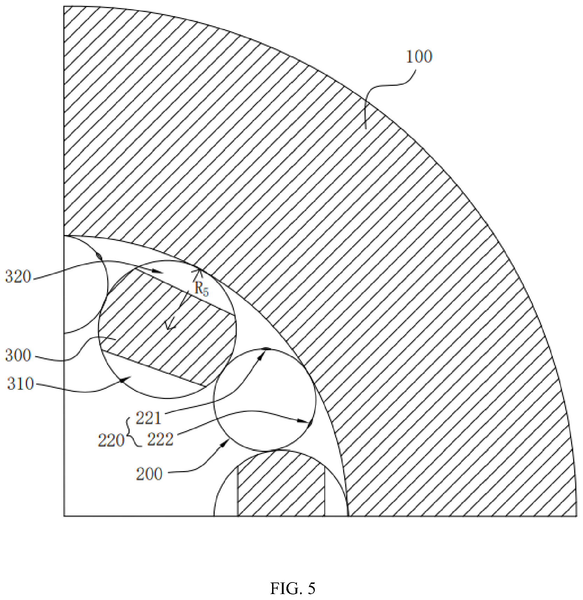

With reference to FIGS. 5 to 6, before arranging the central element 400 coaxially with the outer cladding 100 inside the outer cladding 100, the method includes:
cutting the plurality of supporting elements 300 so as to form, on a side of each supporting element 300 distal from the inner wall of the outer cladding 100, a positioning groove 330 for receiving a portion of the central element 400;
subjecting the positioning groove 330 to honing, acid pickling, and drying treatments.
In this embodiment, the honing includes:
   selecting a suitable honing head and an abrasive, the honing head being typically made of an abrasive material such as oilstone or diamond;
   fixing the supporting element 300 on a workbench of a honing machine to ensure stability and accurate positioning;
   starting the honing machine to bring the honing head into contact with a side of the supporting element 300 distal from the inner wall of the outer cladding 100;
   causing the honing head to perform reciprocating motion and rotational motion on the supporting element 300 under external force to achieve grinding;
   during the honing process, controlling a surface roughness of the positioning groove 330 to reach Ra 0.2;
   when the surface roughness of the positioning groove 330 reaches a required level, stopping honing;
   after the honing is completed, removing grinding debris and chips from a surface of a preform using a cleaning agent.

The acid pickling includes:
mixing hydrofluoric acid at a concentration of 40% and nitric acid at a concentration of 68% in a volume ratio of 4:1 to form an acid pickling solution;
immersing the honed supporting element 300 into the acid pickling solution to remove surface impurities and an oxide layer;
after the acid pickling, rinsing the supporting element 300 with a large amount of clean water to neutralize the residual acid pickling solution;

The drying includes:
placing the acid-pickled supporting element 300 in a dust-free environment to allow moisture to evaporate naturally;
if accelerated drying is required, using hot air drying equipment;
after the drying is completed, inspecting the surface of the supporting element 300 to confirm that no residual moisture or contaminants are present.

In other embodiments, the outer cladding 100, the tubular elements 200, and the central element 400 may also be processed by honing, acid pickling, and drying.

In adoption of the above technical solution, by providing the positioning grooves 330, the central element 400 can be positioned within the plurality of positioning grooves 330, so that the plurality of positioning grooves 330 may provide a positioning effect for the central element 400, preventing the axis of the central element 400 from deviating from the axis of the outer cladding 100. Moreover, the provision of the positioning grooves 330 increases the contact area with the central element 400, thereby indirectly improving the supporting effect of the supporting elements 300 for the central element 400, preventing deformation of the portion of the central element 400 in abutment with the positioning grooves 330, thereby further improving the consistency of the plurality of first anti-resonant layers 410 in shape, thickness, and position. By subjecting the positioning grooves 330 to honing, acid pickling, and drying, impurities on the inner walls of the positioning grooves 330 can be removed, thereby improving the machining accuracy and surface quality of the positioning grooves 330, and indirectly improving the contact effect and connection effect between the central element 400 and the positioning grooves 330.

With reference to FIGS. 5 to 6, cutting the plurality of supporting elements 300 includes:
forming a cutting surface using an axis of the outer cladding 100 as a center and using a radius R1, and cutting the plurality of supporting elements 300 along an axial direction of the outer cladding 100 by the cutting surface, so as to form, on the side of each supporting element 300 distal from the inner wall of the outer cladding 100, the positioning groove 330, where R2 - 2R3 > R1 > R4, R2 being an inner radius of the outer cladding 100, R3 being an outer radius of the tubular element 200, and R4 being an outer radius of the central element 400.

In this embodiment, by placing the assembled outer cladding 100, the plurality of tubular elements 200, and the plurality of supporting elements 300 on a lathe, and by machining the plurality of supporting elements 300 simultaneously with a drill bit of the lathe, simultaneous cutting of the plurality of supporting elements 300 is achieved.

By adopting the above technical solution, forming the cutting surface using the axis of the outer cladding 100 as the center and using the radius R1, and cutting the plurality of supporting elements 300 through the cutting surface along the axial direction of the outer cladding 100, enables the positioning grooves 330 to be simultaneously machined on the plurality of supporting elements 300, thereby improving the machining efficiency of the plurality of positioning grooves 330 and improving the machining accuracy of the positioning grooves 330 on the plurality of supporting elements 300, so that the plurality of positioning grooves 330 can maintain consistency in structure, indirectly improving the structural consistency of the plurality of first anti-resonant layers 410.

Heating the interior of the outer cladding 100 includes:
heating the central element 400, the plurality of supporting elements 300, and the plurality of tubular elements 200 so as to fusion-splice the central element 400 with the plurality of supporting elements 300 and fusion-splice tangential points between the plurality of supporting elements 300 and the plurality of tubular elements 200;
providing seals at contact positions between the plurality of supporting elements 300 and the plurality of tubular elements 200.

In this embodiment, when it is necessary to heat the interior of the outer cladding 100, the outer cladding 100 is placed on a lathe. The lathe is provided with a movable heating source. The heating source may be a graphite heating furnace, an induction heating furnace, or an annular gas torch. The heating temperature of the heat source is from 100°C to 2300°C. The heating source may be moved back and forth on the inner wall of the outer cladding to achieve heating of the interior of the outer cladding 100, or the heating source may be moved back and forth outside the outer cladding to achieve heating of the entire outer cladding 100. By heating the central element 400, the supporting elements 300, and the tubular elements 200, the central element 400, the supporting elements 300, and the tubular elements 200 can be heated to a semi-molten state, thereby achieving fusion-splicing at the tangential points.

In adoption of the above technical solution, by heating the central element 400, the supporting elements 300, and the tubular elements 200, the tangential points between the central element 400 and the supporting elements 300 are fusion-spliced, improving the connection strength between the central element 400 and the supporting elements 300, preventing detachment between the central element 400 and the supporting elements 300 when gas is filled into the first communicated region 500, thereby preventing deformation of the portion of the central element 400 corresponding to the supporting elements 300, thus further improving the structural consistency of the plurality of first anti-resonant layers 410. The fusion-splicing of the tangential points between the plurality of supporting elements 300 and the plurality of tubular elements 200 can prevent detachment between the supporting elements 300 and the tubular elements 200 when gas is filled into the second communicated region 700, improving the sealing performance between the supporting elements 300 and the tubular elements 200, preventing gas in the second communicated region 700 from leaking into the first communicated region 500, thereby maintaining different gas pressures in the first communicated region 500 and the second communicated region 700, facilitating the formation of the plurality of first anti-resonant layers 410 and the plurality of second anti-resonant layers 210. By providing seals at the contact positions between the supporting elements 300 and the tubular elements 200, the seals further improve the sealing performance between the tubular elements 200 and the supporting elements 300, further preventing gas in the second communicated region 700 from leaking into the first communicated region 500, further maintaining different gas pressures in the first communicated region 500 and the second communicated region 700.

Providing seals at the contact positions between the plurality of supporting elements 300 and the plurality of tubular elements 200 includes:
forming the seals at the contact positions between the plurality of supporting elements 300 and the plurality of tubular elements 200 by performing additional welding of quartz.

In this embodiment, the additional welding of quartz includes:
cleaning surfaces of the supporting element 300 and the tubular element 200 to be welded to remove dust, oil, or other contaminants;
placing the supporting element 300 and the tubular element 200 to be welded in correct positions and fixing them using a fixture;
using TIG (tungsten inert gas arc welding) or another technique suitable for quartz welding to perform the additional welding;
melting quartz welding wire or powder by an electric arc generated by a welding machine, and filling the molten quartz into the contact position between the supporting element 300 and the tubular element 200;
during the welding process, using a protective gas (such as argon or helium) to cover the welding area to prevent oxidation of the quartz material;
allowing the welded quartz material to cool naturally or according to process requirements;
performing post-processing such as grinding or polishing on the welding area;
conducting a leakage test to ensure the sealing performance between the tubular element 200 and the supporting element 300.

In adoption of the above technical solution, by sealing the contact position between the supporting element 300 and the tubular element 200 by means of additional welding of quartz, the use of quartz material provides good airtightness. Moreover, the quartz material has excellent high-temperature resistance. The quartz material itself has good chemical stability, and the welded joint can maintain this stability, resisting corrosion and chemical erosion. Quartz is an excellent optical material, and additional welding technique can be used to maintain or restore the optical properties of the hollow-core optical fiber, such as light transmittance and refractive index.

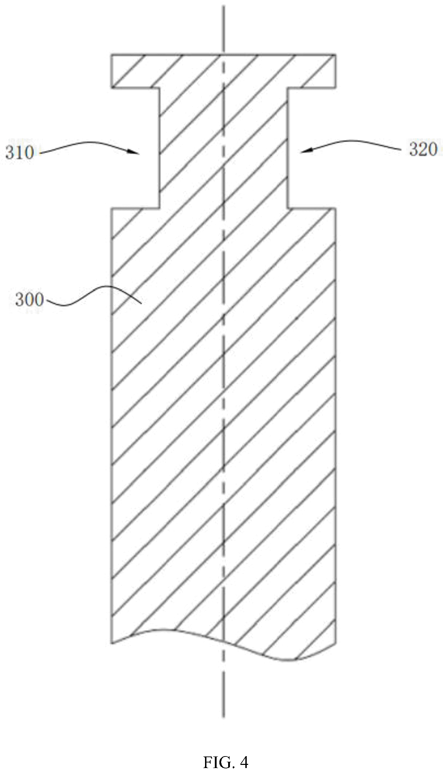

With reference to FIGS. 4 to 8, the method for manufacturing the hollow-core optical fiber further includes:
controlling the number of the tubular elements 200 and the supporting elements 300, the inner radius of the outer cladding 100, the outer radius of the tubular element 200, the outer radius of the central element 400, and the outer radius of the supporting element 300 to satisfy the following formula: ${\left({R}_{3}+{R}_{5}\right)}^{2} = {\left({R}_{4}+{R}_{5}\right)}^{2} + {\left({R}_{2}-{R}_{3}\right)}^{2} - 2 \left({R}_{4}+{R}_{5}\right) \left({R}_{2}-{R}_{3}\right) cos \frac{π}{X}$
where X is the number of the tubular elements 200 and the supporting elements 300, R2 is the inner radius of the outer cladding 100, R3 is the outer radius of the tubular element 200, R4 is the outer radius of the central element 400, and R5 is the outer radius of the supporting element 300.

In this embodiment, the wall thickness of the tubular element 200 is greater than or equal to 0.1 mm and less than or equal to 3 mm. The outer radius of the outer cladding 100 is 10 mm to 35 mm larger than the inner radius R2 of the outer cladding 100. The inner radius R2 of the outer cladding 100 is greater than or equal to 25 mm and less than or equal to 50 mm. The outer radius R4 of the central element 400 is greater than or equal to 5 mm and less than or equal to 25 mm. The outer radius R5 of the supporting element 300 is greater than or equal to 5 mm and less than or equal to 30 mm.

In this embodiment, the wall thickness t1 of the first anti-resonant layer 410 is greater than or equal to 0.1 µm and less than or equal to 2 µm, and the wall thickness t2 of the second anti-resonant layer 210 is also greater than or equal to 0.1 µm and less than or equal to 2 µm; t1 and t2 satisfy the following formula: $\frac{{λ}_{m} \left(2m-1\right)}{4 \sqrt{{n}^{2} - 1}} < {t}_{1} < \frac{{λ}_{m} m}{2 \sqrt{{n}^{2} - 1}}$ where t1 may also be t2, λm is a resonant wavelength, m is an order of the anti-resonant layer, and n is a refractive index of the anti-resonant layer.

The following further description is provided with reference to specific embodiments:
In this embodiment, the inner radius R2 of the outer cladding 100 is set to 25 mm, the outer radius of the outer cladding 100 is set to 50 mm, the outer radius R4 of the central element 400 is set to 13 mm, the wall thickness of the central element 400 is set to 0.5 mm, the outer radius R5 of the supporting element 300 is set to 6 mm, the outer radius R3 of the tubular element 200 is set to 4.4 mm, the wall thickness of the tubular element 200 is set to 0.5 mm, the groove depth of the first groove 310 and the second groove 320 is set to 1.5 mm, the distance between each of the first groove 310 and the second groove 320 and an end surface of the supporting element 300 is set to 10 mm, the length of the first groove 310 and the second groove 320 is set to 15 mm, the distance between each of the first through hole 221 and the second through hole 222 and an end surface of the tubular element 200 is set to 10 mm, the radius of each of the first through hole 221 and the second through hole 222 is set to 0.8 mm, and the radius R1 of the cutting surface is set to 14.6 mm. During gas filling, a first gas filling micro-tube is inserted into the second communicated region 700 to independently supply gas, a second gas filling micro-tube is inserted into the first communicated region 500 to independently supply gas, and a third gas filling micro-tube is inserted into the gas-filling region 600 to independently supply gas. The gas filling pressure of the third gas filling micro-tube is adjusted to 0.5 KPa, and the gas filling pressure of the first gas filling micro-tube and the gas filling pressure of the second gas filling micro-tube are adjusted to 3.5 KPa, causing the portions of the central element 400 between two adjacent supporting elements 300 to deform toward the center of the outer cladding 100, simultaneously forming six first anti-resonant layers 410. The gas filling pressure of the first gas filling micro-tube is adjusted to 5.2 KPa, causing the tubular elements 200 to deform toward the interior of the first anti-resonant layers 410, thereby simultaneously forming six second anti-resonant layers 420. This achieves the manufacture of the hollow-core optical fiber.

Through the manufacturing process of the above embodiments, a total of five hollow-core optical fibers were selected. Among them, three hollow-core optical fibers were provided with the first grooves 310, the second grooves 320, and the communication holes 220. The hollow-core optical fibers provided with the first grooves 310, the second grooves 320, and the communication holes 220 are shown as serial numbers 1, 2, and 3 in Table 1. The remaining two groups were not provided with the first grooves 310, the second grooves 320, and the communication holes 220. The hollow-core optical fibers not provided with the first grooves 310, the second grooves 320, and the communication holes 220 are shown as serial numbers 4 and 5 in Table 1. For the hollow-core optical fibers not provided with the first grooves 310, the second grooves 320, and the communication holes 220, the gas-filling portions of the central element 400 and each tubular element 200 were independent, and each gas-filling portion was separately filled with gas using a gas filling micro-tube to adjust the gas filling pressure. The attenuation values of the optical signal at the same position on the five groups of hollow-core optical fibers were measured, for example, the attenuation values of the optical signal at a position 1550 nm from the optical signal transmitting end are shown in Table 1.

**Table 1 Attenuation values at the 1550 nm position on the hollow-core optical fibers**

| Optical Fiber Serial No. | Average Radius of First Anti-Resonant Layer and Deviation (µm) | Average Radius of Second Anti-Resonant Layer and Deviation (µm) | Average Wall Thickness of First Anti-Resonant Layer and Deviation (µm) | Average Wall Thickness of Second Anti-Resonant Layer and Deviation (µm) | Measured Attenuation at 1550 nm (dB/km) |
|---|---|---|---|---|---|
| 1 | 12±0.2 | 8±0.2 | 1.15±0.1 | 1.15±0.1 | 0.28 |
| 2 | 12.5±0.2 | 8.5±0.2 | 1.17±0.1 | 1.17±0.1 | 0.27 |
| 3 | 12.2±0.25 | 8.3±0.25 | 1.15±0.15 | 1.15±0.1 | 0.29 |
| 4 | 12.2±0.8 | 8.3±0.6 | 1.15±0.3 | 1.15±0.2 | 0.8 |
| 5 | 12±0.7 | 8±0.5 | 1.15±0.3 | 1.15±0.2 | 0.7 |

With reference to Table 1, it can be seen that, for example, in the hollow-core optical fiber with optical fiber serial number 1, the deviation of the radius of the first anti-resonant layers 410 is kept within 0.2 µm, indicating that the plurality of first anti-resonant layers 410 have good consistency in radius, while the deviation of the radius of the second anti-resonant layers 210 is kept within 0.2 µm, indicating that the plurality of second anti-resonant layers 210 have good consistency in radius. The deviation of the wall thickness of the first anti-resonant layers 410 and the second anti-resonant layers 210 is kept within 0.1 µm, indicating that the first anti-resonant layers 410 and the second anti-resonant layers 210 have good consistency in wall thickness. By comparing serial numbers 1, 2, and 3 with serial numbers 4 and 5, it can be further reflected that by adopting the arrangement of the first grooves 310, the second grooves 320, and the communication holes 220, the plurality of first anti-resonant layers 410 and the plurality of second anti-resonant layers 210 have good consistency in radius and wall thickness, and the hollow-core optical fibers provided with the first grooves 310, the second grooves 320, and the communication holes 220 have lower attenuation values of the optical signal at 1550 nm, indicating that the arrangement of the first grooves 310, the second grooves 320, and the communication holes 220 reduces the loss of the hollow-core optical fiber during optical signal transmission.

This application provides a hollow-core optical fiber, the hollow-core optical fiber being produced by the method for manufacturing a hollow-core optical fiber according to any of the above embodiments.

The method for manufacturing the hollow-core optical fiber has been described in detail in the above embodiments, and thus will not be repeated here.

By separately filling gas into the gas-filling region 600, the first communicated region 500, and the second communicated region 700, and by adjusting the gas filling pressure in the first communicated region 500 to be equal to the gas filling pressure in the second communicated region 700, and by making the gas filling pressure in the gas-filling region 600 lower than the gas filling pressure in the first communicated region 500 and the second communicated region 700, the portions of the central element 400 between two adjacent supporting elements 300 deform toward the axis of the outer cladding 100, simultaneously forming the plurality of first anti-resonant layers 410. At this time, the gas filling pressure in the second communicated region 700 is adjusted to be greater than the gas filling pressure in the first communicated region 500, causing the tubular elements 200 to deform toward the interior of the first anti-resonant layers 410, thereby simultaneously forming a plurality of second anti-resonant layers 210. By employing the arrangement of the plurality of supporting elements 300, the gas-filling region 600, the first communicated region 500, and the second communicated region 700, a plurality of first anti-resonant layers 410 and a plurality of second anti-resonant layers 210 can be simultaneously formed, so that the plurality of first anti-resonant layers 410 maintain consistency in structure, and the plurality of second anti-resonant layers 210 maintain consistency in structure. In this way, the plurality of first anti-resonant layers 410 after deformation can have the same shape, thickness, and position, and the plurality of second anti-resonant layers 210 after deformation can have the same shape, thickness, and position, improving the uniformity of the overall manufacturing of the hollow-core optical fiber, thereby indirectly reducing the loss of the hollow-core optical fiber during optical signal transmission.

Other implementations of this application will be readily apparent to those skilled in the art from consideration of the specification and practice of the application disclosed herein. This application is intended to cover any variations, uses, or adaptations of this application, and these variations, uses, or adaptations follow the general principles of this application and include common general knowledge or conventional technical means in the technical field not disclosed by this application. The specification and embodiments are to be regarded as exemplary only, with the true scope and spirit of this application being indicated by the following claims.

It should be understood that this application is not limited to the precise structures described above and illustrated in the accompanying drawings, and various modifications and changes may be made without departing from the scope thereof. The scope of this application is to be limited only by the appended claims.

## Claims

1. A method for manufacturing a hollow-core optical fiber, comprising:
arranging a plurality of tubular elements (200) along a circumferential direction of an outer cladding (100) on an inner wall of the outer cladding (100);
arranging a supporting element (300) between adjacent tubular elements (200), and bringing the supporting element (300) into tangency with the tubular elements (200);
arranging a central element (400) coaxially with the outer cladding (100) inside the outer cladding (100), and abutting the central element (400) against a plurality of supporting elements (300);
communicating spaces among an outer wall of the central element (400), the plurality of tubular elements (200), and the plurality of supporting elements (300) to form a first communicated region (500), wherein an interior of the central element (400) serves as a gas-filling region (600);
heating an interior of the outer cladding (100);
separately filling gas into the gas-filling region (600) and the first communicated region (500), and adjusting gas filling pressures within the gas-filling region (600) and the first communicated region (500) such that the central element (400) deforms toward a center of the outer cladding (100), thereby forming a plurality of first anti-resonant layers (410) spaced apart from one another.

2. The method for manufacturing a hollow-core optical fiber according to claim 1, wherein communicating spaces among the outer wall of the central element (400), the plurality of tubular elements (200), and the plurality of supporting elements (300) to form the first communicated region (500) comprises:
providing a first groove (310) on a side of each supporting element (300) distal from an inner wall of the outer cladding tube, and controlling the first groove (310) to be arranged along a radial direction of the supporting element (300), such that spaces among the outer wall of the central element (400), the plurality of tubular elements (200) and the plurality of supporting elements (300) are communicated via a plurality of first grooves (310) to form the first communicated region (500).

3. The method for manufacturing a hollow-core optical fiber according to claim 1, wherein, before heating the interior of the outer cladding (100), the method comprises:
communicating spaces among the inner wall of the outer cladding (100), the plurality of tubular elements (200) and the plurality of supporting elements (300) with interiors of the plurality of tubular elements (200) to form a second communicated region (700);
after heating the interior of the outer cladding (100), the method comprises:
separately filling gas into the second communicated region (700), and adjusting a gas filling pressure within the second communicated region (700) such that the plurality of tubular elements (200) deform toward an interior of the plurality of first anti-resonant layers (410) to form a plurality of second anti-resonant layers (210).

4. The method for manufacturing a hollow-core optical fiber according to claim 3, wherein communicating spaces among the inner wall of the outer cladding (100), the plurality of tubular elements (200) and the plurality of supporting elements (300) with the interiors of the plurality of tubular elements (200) to form the second communicated region (700) comprises:
providing a communication hole (220) extending through the tubular element (200) in the tubular element (200);
providing a second groove (320) on a side of the supporting element (300) proximal to the inner wall of the outer cladding tube, and controlling the second groove (320) to be arranged along a radial direction of the supporting element (300), such that spaces among the inner wall of the outer cladding (100), the plurality of tubular elements (200) and the plurality of supporting elements (300) are communicated with the interiors of the plurality of tubular elements (200) via a plurality of second grooves (320) to form the second communicated region (700).

5. The method for manufacturing a hollow-core optical fiber according to any one of claims 1 to 4, wherein, before arranging the central element (400) coaxially with the outer cladding (100) inside the outer cladding (100), the method comprises:
cutting the plurality of supporting elements (300) so as to form, on a side of each supporting element (300) distal from the inner wall of the outer cladding (100), a positioning groove (330) for receiving a portion of the central element (400);
subjecting the positioning groove (330) to honing, acid pickling, and drying treatments.

6. The method for manufacturing a hollow-core optical fiber according to claim 5, wherein cutting the plurality of supporting elements (300) comprises:
forming a cutting surface using an axis of the outer cladding (100) as a center and using a radius R₁, and cutting the plurality of supporting elements (300) along an axial direction of the outer cladding (100) by the cutting surface, so as to form, on the side of each supporting element (300) distal from the inner wall of the outer cladding (100), the positioning groove (330), wherein R₂-2R₃>R₁>R₄, R₂ being an inner radius of the outer cladding (100), R₃ being an outer radius of the tubular element (200), and R₄ being an outer radius of the central element (400).

7. The method for manufacturing a hollow-core optical fiber according to any one of claims 1 to 4, wherein heating the interior of the outer cladding (100) comprises:
heating the central element (400), the plurality of supporting elements (300), and the plurality of tubular elements (200) so as to fusion-splice the central element (400) with the plurality of supporting elements (300) and fusion-splice tangential points between the plurality of supporting elements (300) and the plurality of tubular elements (200);
providing seals at contact positions between the plurality of supporting elements (300) and the plurality of tubular elements (200).

8. The method for manufacturing a hollow-core optical fiber according to claim 7, wherein providing seals at the contact positions between the plurality of supporting elements (300) and the plurality of tubular elements (200) comprises:
forming the seals at the contact positions between the plurality of supporting elements (300) and the plurality of tubular elements (200) by performing additional welding of quartz.

9. The method for manufacturing a hollow-core optical fiber according to any one of claims 1 to 4, comprising:
controlling a number of the tubular element (200) and the supporting element (300), an inner radius of the outer cladding (100), an outer radius of the tubular element (200), an outer radius of the central element (400), and an outer radius of the supporting element (300) to satisfy the following formula: ${\left({R}_{3}+{R}_{5}\right)}^{2} = {\left({R}_{4}+{R}_{5}\right)}^{2} + {\left({R}_{2}-{R}_{3}\right)}^{2} - 2 \left({R}_{4}+{R}_{5}\right) \left({R}_{2}-{R}_{3}\right) cos \frac{π}{X}$
wherein X is the number of the tubular element (200) and the supporting element (300), R₂ is the inner radius of the outer cladding (100), R₃ is the outer radius of the tubular element (200), R₄ is the outer radius of the central element (400), and R₅ is the outer radius of the supporting element (300).

10. A hollow-core optical fiber, wherein the hollow-core optical fiber is produced by the method for manufacturing a hollow-core optical fiber according to any one of claims 1 to 9.
